(19) Europäisches Patentamt / European Patent Office / Office européen des brevets

(11) **EP 2 491 711 B1**

(12) **FASCICULE DE BREVET EUROPEEN**

(45) Date de publication et mention de la délivrance du brevet:
**08.07.2015 Bulletin 2015/28**

(21) Numéro de dépôt: **10785143.8**

(22) Date de dépôt: **19.10.2010**

(51) Int Cl.:
*H04N 5/33* (2006.01)    *H04N 5/365* (2011.01)
*G01J 5/16* (2006.01)    *G01J 5/20* (2006.01)

(86) Numéro de dépôt international:
**PCT/FR2010/052227**

(87) Numéro de publication internationale:
**WO 2011/048326 (28.04.2011 Gazette 2011/17)**

(54) **PROCÉDÉ DE CORRECTION DES IMAGES DÉLIVRÉES PAR UN DÉTECTEUR NON RÉGULÉ EN TEMPERATURE, ET DÉTECTEUR METTANT EN OEUVRE UN TEL PROCÉDÉ**

VERFAHREN ZUR KORREKTUR VON DURCH EINEN DETEKTOR OHNE TEMPERATURREGULIERUNG AUSGEGEBENEN BILDERN SOWIE DETEKTOR ZUR ANWENDUNG EINES SOLCHEN VERFAHRENS

METHOD FOR CORRECTING IMAGES OUTPUT BY A DETECTOR WITHOUT TEMPERATURE REGULATION AND DETECTOR IMPLEMENTING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.10.2009 FR 0957436**

(43) Date de publication de la demande:
**29.08.2012 Bulletin 2012/35**

(73) Titulaire: **ULIS**
**38113 Veurey Voroize (FR)**

(72) Inventeurs:
• **MINASSIAN, Christophe**
**F-38340 Voreppe (FR)**
• **PISTRE, Claire**
**F-38000 Grenoble (FR)**
• **CHIAPPA, Jean-Marc**
**F-38250 Lans en Vercors (FR)**

(74) Mandataire: **Vuillermoz, Bruno et al**
**Cabinet Laurent & Charras**
**"Le Contemporain"**
**50, Chemin de la Bruyère**
**69574 Dardilly Cédex (FR)**

(56) Documents cités:
**WO-A1-2006/100663    WO-A2-01/84118**
**US-A1- 2003 160 171    US-A1- 2005 029 453**
**US-B2- 6 630 674**

**Description**

**DOMAINE DE L'INVENTION**

La présente invention a trait au domaine de l'imagerie infrarouge et de la pyrométrie bolométrique. Plus particulièrement, l'invention s'applique au domaine des détecteurs bolométriques, quels que soient la bande de détection et le type de matériau bolométrique utilisé.

**ETAT DE LA TECHNIQUE**

Les détecteurs destinés à l'imagerie infrarouge sont classiquement réalisés sous la forme d'une matrice de détecteurs élémentaires, ou bolomètres, selon une ou deux dimensions, lesdits bolomètres prenant la forme de membranes suspendues au dessus d'un substrat, généralement réalisé en silicium, via des bras de soutien de résistance thermique élevée. L'ensemble des membranes suspendues forme un élément de détection matricielle, usuellement désigné sous le terme de « rétine ».

Il est usuellement ménagé dans le substrat des moyens d'adressage séquentiel des détecteurs élémentaires et des moyens d'excitation électrique et de pré-traitement des signaux électriques générés par ces bolomètres. Ce substrat et les moyens intégrés sont communément désignés par le terme « circuit de lecture ».

Pour obtenir une scène par l'intermédiaire de ce détecteur, on projette la scène, à travers une optique adaptée, sur la rétine qui est agencée dans le plan focal de l'optique, et des stimuli électriques cadencés sont appliqués par l'intermédiaire du circuit de lecture à chacun des bolomètres, ou à chaque rangée de tels bolomètres, afin d'obtenir un signal électrique constituant l'image de la température atteinte par chacun desdits détecteurs élémentaires. Ce signal est traité de manière plus ou moins élaborée par le circuit de lecture, puis éventuellement par un dispositif électronique extérieur au boîtier afin de générer l'image thermique de la scène observée.

Ce type de détecteur présente de nombreux avantages en termes de coût de fabrication et de mise en oeuvre, mais présente aussi des inconvénients qui limitent les performances des systèmes exploitant de tels détecteurs. Il se pose en particulier des problèmes d'uniformité de l'image obtenue. En effet, en face d'une scène uniforme, les bolomètres ne fournissent pas tous exactement le même signal, ce qui se traduit par un bruit spatial fixe sur l'image ainsi obtenue, bruit qui nuit grandement à la qualité des images délivrées. On parle communément de « dispersion d'offset ».

Une image issue de la matrice de bolomètres est alors corrigée de la dispersion d'offset en retranchant à chaque point de ladite image l'offset correspondant à ce point, mémorisé dans une « table d'offsets », obtenue lors d'une calibration en usine en exposant la rétine à un corps noir de température constante et connue. L'image corrigée d'une scène uniforme est alors sensiblement uniforme.

Toutefois, la détermination d'une table d'offsets est usuellement délicate et longue. Il convient en effet de présenter au détecteur une scène uniforme de température connue, classiquement un corps noir de température uniforme, le tout en prenant soin d'avoir une température constante pour la rétine et sensiblement égale à celle du corps noir lors de l'acquisition.

En outre, l'offset d'un bolomètre dépend de la température de celui-ci, de sorte que si la température du bolomètre s'écarte de la température à laquelle la table d'offsets a été déterminée, cette dernière devient non pertinente et la correction non satisfaisante.

Pour pallier ce problème, dans un premier type de détecteurs bolométriques, le plan focal est régulé en température, par exemple au moyen d'un module à effet Peltier ou d'un réchauffeur. Il est ainsi recherché que les variations de la température des bolomètres soient uniquement provoquées par le rayonnement issu de la scène observée.

Dans une première variante de détecteurs à plan focal régulé en température, la régulation de la température est réalisée pour une unique consigne de température prédéterminée. On parle alors de « mode régulé mono-température ». Cette variante présente l'avantage de limiter sensiblement le domaine de fonctionnement en température du détecteur au voisinage de ladite consigne, permettant ainsi l'utilisation d'une unique table d'offsets. La calibration en usine est ainsi limitée. En revanche, la consommation d'énergie du détecteur est loin d'être optimale, et peut même s'avérer un facteur limitant dans le cadre de détecteur portable autonome. En effet, dès lors que la température ambiante du détecteur s'écarte sensiblement de la consigne de température, l'énergie utilisée pour la régulation est importante. De plus, quand bien même une régulation serait mise en oeuvre, celle-ci ne peut assurer une température parfaitement constante. Le détecteur est constamment soumis à des perturbations de température en provenance de l'environnement de la rétine, en particulier le boitier dans laquelle est elle intégrée, lequel boitier et ses éléments associés (bloc optique, diaphragme, ...) voient leur température évoluer librement en fonction des interférences radiatives ou autres en provenance de l'extérieur. De fait, il existe toujours des transitoires s'écartant de la consigne de température, transitoire d'autant plus important que la température ambiante s'écarte de celle-ci.

Le mode de régulation mono température étant énergivore et de moins en moins précis à mesure que la température ambiante s'écarte de l'unique consigne de température du plan focal, une seconde variante de détecteurs régulés en température, dite « régulée multi-température », utilise plusieurs consignes de température afin que l'écart entre la température ambiante et la température de la rétine soit maintenu sous un seuil prédéterminé. La consommation énergétique pour la régulation est ainsi minimisée et l'imprécision de la correction des offsets contenue quelle que soit la température. Cela suppose cependant de prévoir une table d'offsets pour chaque consigne de température. La quantité de tables d'offsets est usuellement importante pour profiter au mieux des avantages du mode régulé multi-température, ce qui signifie une très longue calibration de celles-ci en usine et donc un coût de fabrication non négligeable. En outre, on observe lors de l'utilisation que les phases de transition d'une première consigne de température à une seconde consigne de température induisent généralement une perte de qualité des images délivrées par le détecteur.

Les détecteurs régulés en température étant grands consommateurs d'énergie, encombrants et lourds, des détecteurs non régulés en température, communément connus sous l'expression détecteurs « *TEC-less* », ont été mis au point.

Dans une première variante des détecteurs « *TEC-less »,* par exemple décrite dans les documents EP 1 953 509 et US 6 433 333, une pluralité de tables d'offsets sont acquises en usine pour différentes températures du plan focal dans un intervalle présupposé de fonctionnement du détecteur, puis mémorisées dans le détecteur. Usuellement, pour régler la température ambiante du détecteur, ce dernier est placé dans une enceinte thermostatée qui réalise des paliers de températures d'une heure chacun environ. Au final ce processus de calibration dure de nombreuses heures et mobilise une enceinte thermostatée, et donc s'avère particulièrement couteux pour le fabricant.

Lors du fonctionnement du détecteur, la température en un point du substrat est mesurée et une table d'offsets est sélectionnée parmi les tables mémorisées en fonction de la mesure de température, ou bien une table d'offsets opérationnelle pour la température mesurée est obtenue par interpolation des tables d'offsets mémorisées. La table d'offsets ainsi produite, et par conséquent la correction, dépend donc de la température. Toutefois, l'efficacité d'une telle correction dépend de la pertinence de la table d'offsets utilisée. De fait, il est nécessaire de prévoir un nombre conséquent de tables pour l'intervalle de températures considéré, ce qui s'avère coûteux.

L'utilisation de tables d'offsets s'avérant économiquement défavorable, d'autres types de correction ont été conçus.

Dans une deuxième variante des détecteurs « *TEC-less* », par exemple décrite dans les documents US 5 756 999 et US 6 028 309, la correction de la dispersion des offsets des bolomètres est réalisée par l'application d'une polarisation variable de ceux-ci. En effet, le signal issu d'un bolomètre dépend directement du courant le traversant. En modifiant ce courant, on modifie ainsi le niveau continu de sortie du bolomètre et donc la valeur de son offset. Toutefois, ce type de correction nécessite la mise en oeuvre d'une circuiterie de polarisation individualisée pour chaque bolomètre, ce qui complique fortement la conception des circuits des détecteurs et diminue le rendement de fabrication de ceux-ci. En outre, on observe une dégradation dommageable du rapport signal/bruit. Par ailleurs, ce type de correction nécessite tout de même des tables d'offsets, bien qu'en nombre limité au regard du nombre de tables de la première variante.

Dans une troisième variante de détecteurs « *TEC-less* », par exemple décrite dans le document US 6 690 013, la correction de dispersion des offsets est réalisée en fonction de la mesure des résistances des bolomètres en se basant sur un modèle empirique. Toutefois, la mesure seule des résistances électriques des pixels n'est pas représentative de l'ensemble des causes de la dispersion des offsets. La correction ainsi réalisée n'est donc que partiellement efficace. En outre, le modèle empirique utilise tout de même des tables de paramètres qui nécessitent une calibration en usine analogue à la calibration de table d'offsets.

Enfin, dans une quatrième variante de détecteurs « *TEC-less* », par exemple décrite dans le document WO 2007/106018, la correction de la dispersion des offsets se fonde sur la scène elle-même, et plus particulièrement sur l'utilisation de l'évolution temporelle d'informations sur la scène observée par le détecteur. Ce type de corrections présente l'avantage de ne nécessiter aucune calibration préalable en usine. En revanche, les corrections de ce type ne sont adaptées qu'au cas des scènes en mouvement, car, de par leur principe même, ces corrections éliminent, ou au moins dégradent gravement la détection des éléments statiques ou de mobilité faible de la scène. Par ailleurs, des images « fantôme » non représentative de la scène observée apparaissent dans certaines conditions.

On connaît du document US-A-2005/0029453 ou WO-A-01/84118 un procédé de mise à jour d'une table d'offset à partir de deux images d'un obturateur prises au cours du fonctionnement du détecteur. Ce procédé consiste à tester une condition de mise à jour d'une table d'offsets, par exemple une condition portant sur la variation de température observée depuis le dernier calcul de la table d'offsets ou une condition portant sur l'ancienneté de la table d'offsets, et à acquérir une nouvelle image de l'obturateur si la condition est satisfaite. Une fois la nouvelle image acquise, une nouvelle table d'offsets est alors calculée en fonction de cette nouvelle image et de l'image acquise lors de la dernière mise à jour.

Ainsi comme il est possible de le constater, les corrections basées sur des tables d'offsets préalablement calibrées présentent la meilleure efficacité car les valeurs contenues dans lesdites tables sont directement liées à la mesure des offsets des bolomètres. En outre, ces corrections n'impliquent pas de limitation dans le fonctionnement du détecteur. Par ailleurs, les corrections alternatives visant à limiter, voire éliminer les tables d'offsets, permettent de concevoir des détecteurs « *TEC-less* » à moindre coût mais au détriment de la qualité de la correction ou d'une limitation de l'usage du détecteur.

**EXPOSE DE L'INVENTION**

Le but de la présente invention est de proposer une méthode de correction efficace et simple de la dispersion des offsets dans un détecteur « *TEC-less* » qui ne nécessite pas de calibration préalable en usine.

A cet effet, l'invention telle que définie dans la revendication 1 a pour objet un procédé de correction des images délivrées par une matrice de bolomètres d'un détecteur non régulé en température, ladite matrice comportant une rétine de membranes bolométriques agencée dans le plan focal d'une optique, suspendue au dessus d'un substrat dans lequel est formé un circuit de lecture apte à fournir en sortie un flux de valeurs brutes de signal correspondant à chaque bolomètre de la matrice en relation avec une scène observée, le détecteur comprenant en outre un obturateur agencé entre l'optique et la rétine, le procédé comportant, , lors d'un mode de fonctionnement dans lequel les conditions de températures ambiantes du détecteurs sont libres d'évoluer :

- une première étape de fermeture de l'obturateur, et d'acquisition et de mémorisation dans une mémoire du détecteur :

   ◦ d'une table courante de valeurs brutes correspondant à une image de l'obturateur par la matrice de bolomètres ; et
   ◦ d'une température du détecteur lors de l'acquisition de ladite table de valeurs brutes courante,

- une seconde étape de détermination et de mémorisation dans la mémoire du détecteur d'une table de corrections d'offsets pour la température actuelle du détecteur en fonction :

   ◦ de la table courante de valeurs brutes et de la température associée ; et
   ◦ d'un ensemble courant de tables de valeurs brutes correspondant à des images de l'obturateur par la matrice de bolomètres, préalablement mémorisées dans la mémoire du détecteur, et des températures du détecteur associées respectivement à chacune de ces tables lors de leurs acquisitions, lesdites températures étant mémorisées dans la mémoire du détecteur ; et

- une troisième étape de correction du flux de valeurs brutes au moyen de la table de corrections d'offsets,

Selon l'invention, le procédé comporte, consécutivement à l'acquisition d'une table courante de valeurs brutes, un processus de maintenance de l'ensemble courant de tables de valeurs brutes, comprenant :

- le test d'une condition de remplacement d'une table dudit ensemble courant par la table courante de valeurs brutes; et
- si ladite condition est satisfaite, le remplacement de la table dudit ensemble courant de tables par la table courante de valeurs brutes, et le remplacement de la température d'acquisition de la table remplacée par la température d'acquisition de la table courante de valeurs brutes.

Le test consiste à déterminer sur la base d'au moins un critère prédéterminé s'il existe un nouvel ensemble de tables, issu du remplacement d'une table de l'ensemble courant par la table courante, plus pertinent que l'ensemble courant vis-à-vis d'une détermination ultérieure de la table d'offsets.

Par valeur brute, on entend ici le signal issu d'un bolomètre sans qu'aucune correction d'offset ne lui soit appliquée. Par « maintenance » on entend le processus décisionnel d'activation de la première étape, et de modification ou non de l'ensemble de valeurs brutes, puis l'application de ces modifications selon la décision prise. Le processus décisionnel est fondé sur les valeurs d'un certain nombre de paramètres d'état du détecteur acquis et mémorisés simultanément aux tables de valeurs brutes et attachés à ces tables. Ce processus décisionnel est constitué d'une série d'opérations conditionnelles destinées à décider de l'opportunité de la « mise à jour » de l'ensemble. La « mise à jour » se définit quant à elle comme une incrémentation de nombre N d'éléments de l'ensemble, ou/et une modification, en termes de valeur brute ou/et de paramètre, d'au moins un élément de l'ensemble autre que l'élément acquis en dernier lieu.

En d'autres termes, l'invention conserve le concept de valeur de correction d'offset obtenue empiriquement par mesure. Cependant, ces valeurs sont au final obtenues lors du fonctionnement même du détecteur, et non lors d'une calibration en usine, en faisant l'hypothèse que l'obturateur se comporte comme le corps noir de température uniforme utilisé lors de la calibration des tables d'offsets de l'état de la technique.

Alors que selon l'état de la technique, les tables d'offsets sont calibrées en respectant des conditions d'acquisition très strictes afin d'obtenir une précision optimale pour les valeurs à utiliser pour la correction de la dispersion des offsets, l'invention utilise des conditions moins restrictives au moyen de l'obturateur, à la température ambiante, et cela sans régulation de température. Ainsi, pour l'obtention des valeurs brutes utilisées pour le calcul de la valeur de correction d'offset, il n'est pas nécessaire de réguler la température du plan focal. Il n'est pas non plus nécessaire que la température du plan focal soit sensiblement égale à la température de la scène.

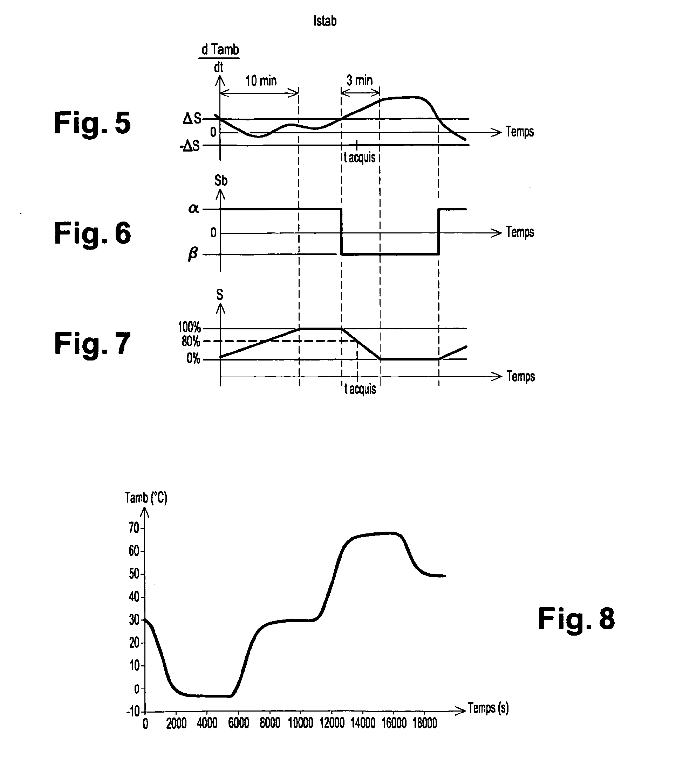

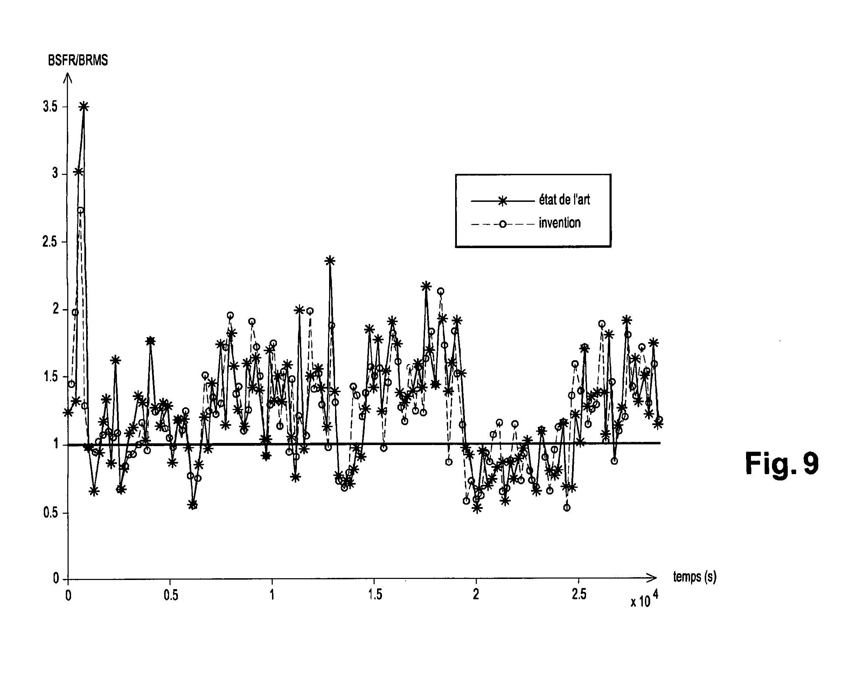

Au final, alors même que la correction semble de prime abord de moins bonne qualité que celle basée sur les tables d'offsets précisément calibrées en usine, il s'avère en fait que la correction de la dispersion d'offset selon l'invention est de bonne qualité. Comme cela sera démontré ci-après en relation avec les figures 8 et 9, la correction selon l'invention présente en effet une qualité sensiblement identique à celle de la correction obtenue sur la base de tables précisément calibrées en usine. L'invention prend donc le contrepied de ce qui était jusque là usuellement admis dans le domaine et de ce qui est ainsi explicitement ou implicitement compris dans les documents de l'état de la technique, à savoir qu'il est absolument nécessaire d'avoir des tables calibrées dans des conditions bien maîtrisées de laboratoire pour obtenir une correction précise.

De fait, il n'est pas nécessaire grâce à l'invention de prévoir une calibration en usine, ce qui réduit sensiblement le coût de fabrication du détecteur, et les valeurs utilisées pour la correction peuvent être obtenues lors du fonctionnement de celui-ci.

Grâce à l'invention trois avantages sont cumulés. Le détecteur fonctionne dans un mode « *TEC-less* », signifiant ainsi une consommation d'énergie réduite au minimum, la calibration en usine est réduite à un point minimal et la qualité d'image obtenue est très satisfaisante.

On notera que le procédé selon l'invention se distingue du procédé tel que décrit dans le document US-A-2005/0029453 sur la manière dont la table courante est utilisée pour mettre à jour l'ensemble de tables mémorisées.

Tout d'abord, le procédé selon l'invention et le procédé du document US-A-2005/0029453 utilisent tous les deux la table courante pour le calcul de la table d'offsets. En effet, à l'instant considéré, la table courante est jugée comme comprenant une information pertinente.

Cependant, selon l'invention et contrairement au procédé du document US-A-2005/0029453, il existe un processus supplémentaire de mise à jour de l'ensemble de tables de valeurs brutes qui est distinct du processus de mise à jour de la table d'offsets et qui comprend ses propres critères.

En effet, selon l'invention, il est testé si le remplacement d'une table de l'ensemble de tables mémorisées par la table courante est susceptible d'apporter un gain supplémentaire dans la qualité du calcul de la table d'offsets qui aura lieu ultérieurement. Ce gain supplémentaire est défini par rapport à un ou plusieurs critère(s) objectif(s) se basant uniquement sur les tables susceptibles de former l'ensemble de tables. Avantageusement, mais de manière non limitative, l'idéal est par exemple d'obtenir un ensemble de tables qui sont récentes, régulièrement espacées du point de vue de la température d'acquisition et acquises alors que la température était stable.

Dans le document US-A-2005/0029453, le remplacement d'une table ancienne par la table courante est systématique. Dès lors que la condition sur la température ou l'ancienneté est satisfaite, il y a un remplacement. Il n'existe aucune évaluation pour savoir si ce remplacement est désavantageux ou non. Par exemple, il est possible que la table courante soit acquise dans des conditions thermiques instables, et que la table acquise lors de la mise à jour précédente soit elle aussi acquise lors de conditions thermiques instables. La table d'offsets calculée sur la base de ces deux tables est alors de très mauvaise qualité. Ainsi, si le détecteur fonctionne dans un environnement qui change de température, comme par exemple lors du passage d'un endroit chaud à un endroit froid, le détecteur délivre une image de très mauvaise qualité pendant un long moment.

Au contraire, selon l'invention, la table courante ne remplacerait pas de manière systématique une des tables de l'ensemble de tables, mais uniquement s'il existe une table considérée comme encore « plus mauvaise ».

Enfin, pour la bonne compréhension du procédé selon l'invention, comme la bonne compréhension du procédé de l'état de la technique, il est nécessaire de bien noter que la gestion de la « mauvaise qualité » de la table courante, qui est systématiquement utilisée lors du calcul de la table d'offsets, est réalisée via la fréquence de mise à jour de la table courante elle même, laquelle est toujours la plus précise à court terme. Ainsi par exemple, lors d'une variation importante de température, d'une part la condition sur la température est observée plus souvent, et par conséquent la table d'offsets est mise à jour plus souvent, mais une table courante jugée moins pertinente que toutes les autres tables (qu'on estime ainsi « de mauvaise qualité » selon les critères prédéfinis), ne laisse pas d'empreinte mémorisée dans l'ensemble le plus pertinent utilisé lors des corrections ultérieures.

Selon un mode de réalisation de l'invention, l'ensemble courant de tables mémorisées est partiellement ou totalement construit en fonction de tables courantes acquises lors du fonctionnement du détecteur. Aucune calibration en usine n'est ainsi réalisée pour le détecteur.

En variante, un ensemble de valeurs brutes par défaut est déterminé une unique fois sur un ou plusieurs détecteur(s) de référence et initialement mémorisé dans le détecteur selon l'invention. Ces valeurs par défaut sont alors remplacées (mises à jour) au fur et à mesure lors du fonctionnement du détecteur. La correction est alors plus précise au début du processus en raison des valeurs par défaut déjà relativement pertinentes initialement mémorisées. On notera qu'aucune calibration préalable n'est mise en oeuvre.

Selon un mode de réalisation de l'invention, le au moins critère comprend un critère relatif à la pertinence de ces tables vis-à-vis de l'état de fonctionnement courant du détecteur, notamment un critère relatif à l'ancienneté de leur acquisition et/ou un critère relatif à la stabilité de la température du détecteur lors de l'acquisition desdites tables de valeurs brutes.

En d'autres termes, une table de valeurs brutes qui sert de base au calcul de la table de corrections d'offsets peut ne plus être précisément valide au bout d'un moment, par exemple en raison d'une dérive de caractéristiques du bolomètre. Il est donc avantageux de remplacer les tables de valeurs brutes les plus anciennes de manière récurrente, par exemple périodiquement et/ou selon le résultat d'un test d'ancienneté régulièrement reconduit. De même, certaines conditions d'acquisition d'une table de valeurs brutes sont défavorables, comme par exemple les tables de valeurs brutes acquises lorsque la température du détecteur varie rapidement. Il est donc avantageux de remplacer (mettre à jour) les tables de valeurs brutes antérieurement acquises dans de telles conditions, s'il s'en trouve. Ainsi, après une période d'utilisation du détecteur, il est obtenu des tables de valeurs brutes récentes et acquises dans les meilleures conditions, et donc une table de corrections d'offsets de qualité optimale.

Selon un mode de réalisation particulier de l'invention, le au moins critère comprend un critère relatif à la pertinence de ces tables vis-à-vis du calcul de la table de correction d'offsets. Notamment, ledit critère de pertinence comporte un critère relatif à la répartition des températures auxquelles les tables ont été acquises, la mise à jour de l'ensemble de tables de valeurs brutes visant à une répartition optimale des températures à l'intérieur de l'intervalle de températures dans lequel se trouve le détecteur au cours de son fonctionnement.

En d'autres termes, la qualité de la table de corrections d'offsets dépend également de la manière dont on l'a calculée, indépendamment des grandeurs mesurées utilisées lors de ce calcul. Par exemple, si toutes les tables mémorisées correspondent à des températures regroupées autour d'une température donnée, le calcul d'une table de corrections d'offsets pour une autre température éloignée sur la base de l'interpolation des tables regroupées donnera une valeur peu pertinente. La construction et la mise à jour récurrente de l'ensemble des valeurs brutes selon l'invention permettent ainsi une répartition optimale des températures des tables de valeurs brutes pour le calcul de la table de corrections d'offsets, par exemple par interpolation. Notamment, il est recherché que lesdites températures d'acquisition des tables de valeurs brutes s'échelonnent régulièrement, par exemple tous les 15°C, dans un intervalle de fonctionnement du détecteur, typiquement de -20°C à +70°C.

Selon un mode de réalisation de l'invention, le procédé comporte en outre l'évaluation d'une première condition de mise à jour de la table de corrections d'offset, la satisfaction de ladite première condition déclenchant :

- la fermeture de l'obturateur, l'acquisition d'une table courante de valeurs brutes et le processus de maintenance de l'ensemble courant des tables mémorisées; et
- le calcul d'une nouvelle table de corrections d'offsets en fonction de la table courante de valeurs brutes et de l'ensemble des tables de valeurs brutes mémorisées.

Notamment, la première condition de mise à jour de la valeur de correction d'offset comporte un critère relatif à l'ancienneté de la table courante de valeurs brutes, ladite première condition étant notamment satisfaite lorsque l'ancienneté de ladite table courante est supérieure à une durée prédéterminée. Notamment encore, la première condition de mise à jour de la table de corrections d'offsets comporte un critère relatif à l'écart entre la température actuelle (à l'instant précis considéré) du détecteur et la température du détecteur associée à la valeur brute courante, ladite première condition étant notamment satisfaite lorsque ledit écart est supérieur à un premier seuil prédéterminé.

De manière privilégiée, le procédé comporte en outre l'évaluation d'une deuxième condition de mise à jour de la table de corrections d'offsets, la satisfaction de ladite deuxième condition de mise à jour déclenchant le calcul d'une nouvelle table de corrections d'offsets en fonction de la table courante de valeurs brutes et de l'ensemble de tables de valeurs brutes mémorisées sans déclenchement du processus de maintenance. Notamment, la deuxième condition de mise à jour de la valeur de correction d'offset comporte un critère relatif à l'écart entre la température actuelle du détecteur et la température du détecteur associée au dernier calcul de la table de corrections d'offsets, ladite deuxième condition étant notamment satisfaite lorsque ledit écart est supérieur à un deuxième seuil prédéterminé inférieur au premier seuil.

En d'autres termes, l'état de fonctionnement du détecteur a pu varier depuis le dernier calcul des valeurs de correction d'offset. Une mise à jour de celles-ci est donc souhaitable. Toutefois, sous certaines conditions, les valeurs brutes courantes dernièrement acquises restent valides, notamment lorsque la température actuelle du détecteur est restée très proche de la température à laquelle les valeurs brutes courantes ont été acquises, comme par exemple lorsque la température du détecteur n'a pas varié de plus de quelques dixièmes de degré.

En d'autres termes encore, la valeur de correction d'offset est recalculée uniquement lorsque cela est jugé utile d'après des conditions particulières. Le bruit additionnel associé à un re-calcul systématique délibérément très fréquent dans le but d'échantillonner de manière serrée les éventuelles modifications d'ambiance est ainsi évité, et la consommation du système est réduite. La valeur de correction d'offset est ainsi réputée valide pour un voisinage autour de la température pour laquelle elle a été calculée et/ou pendant une durée prédéterminée. Comme on peut le constater, l'invention permet l'utilisation directe des données les plus pertinentes pour le calcul de la valeur de correction d'offset, notamment vis-à-vis de la température actuelle du détecteur.

Selon un mode de réalisation particulier de l'invention, la table de corrections d'offsets comporte le calcul d'une table de valeurs brutes par interpolation de la table courante de valeurs brutes et d'un nombre prédéterminé de tables de l'ensemble de tables de valeurs brutes mémorisées, et le calcul de la valeur de correction d'offset est réalisé selon la relation :

$$O_n = \overline{S_{int\,erp}(Tamb)} - G_n \times S_{int\,erp}(Tamb)_n$$

où $O_n$ est une valeur de la table de corrections d'offsets, $\overline{S_{interp}(Tamb)}$ est la valeur moyenne de la table interpolée de valeurs brutes, $G_n$ est un coefficient prédéterminé de correction du gain du bolomètre correspondant à ladite valeur $O_n$, et $S_{interp}(Tamb)_n$ est la valeur brute correspondant à ladite valeur $O_n$ de la table interpolée.

L'invention a également pour objet un détecteur thermique non régulé en température, comportant :

- une matrice de bolomètres comprenant une rétine de membranes bolométriques, suspendue au dessus d'un substrat dans lequel est formé un circuit de lecture apte à fournir en sortie un flux de valeurs brutes de signal correspondant à chaque bolomètre de la matrice en relation avec une scène observée, et agencée dans le plan focal d'une optique ;
- au moins une sonde de température apte à mesurer la température en un point du substrat ;
- un obturateur pilotable apte à former une scène uniforme pour la rétine ;
- des moyens de traitement d'informations comportant :

  ◦ des moyens de mémorisation aptes à mémoriser une table courante de valeurs brutes et un ensemble courant de tables de valeurs brutes correspondant à des images de l'obturateur par la matrice de bolomètres et des mesures de température délivrées par la sonde de température lors des instants d'acquisition desdites tables;
  ◦ des moyens de calcul d'une table de corrections d'offsets en fonction de la température actuelle du détecteur, de la table courante de valeurs brutes et de l'ensemble de tables de valeurs brutes préalablement mémorisées ; et
  ◦ des moyens de correction du flux de valeurs brutes au moyen de la table de corrections d'offsets.

Selon l'invention, les moyens de traitement d'informations comprennent en outre des moyens de maintenance de l'ensemble courant des tables de valeurs brutes mémorisées et de la table de corrections d'offsets, lesdits moyens de maintenance étant aptes à :

- commander la fermeture de l'obturateur suivi de l'acquisition et de la mémorisation d'une nouvelle table courante de valeurs brutes courantes correspondant à l'obturateur et de la mesure de température issue de la sonde à l'instant d'acquisition de la nouvelle table courante; et
- tester d'une condition de remplacement d'une table dudit ensemble courant par la table courante de valeurs brutes ; et
- si ladite condition est satisfaite, remplacer la table dudit ensemble courant de tables par la table courante de valeurs brutes, et le remplacement de la température d'acquisition de la table remplacée par la température d'acquisition de la table courante de valeur brute,

Le test consiste à déterminer sur la base d'au moins un critère prédéterminé s'il existe un nouvel ensemble de tables, issu du remplacement d'une table de l'ensemble courant par la table courante, plus pertinent que l'ensemble courant vis-à-vis d'une détermination ultérieure de la table d'offsets.

En d'autres termes, le détecteur est apte à mettre en oeuvre un procédé du type précité.

## BREVE DESCRIPTION DES FIGURES

L'invention sera mieux comprise à la lecture de la description qui va suivre, donnée uniquement à titre d'exemple, et réalisée en relation avec les dessins annexés, dans lesquels :

- la figure 1 est une vue schématique d'un détecteur selon l'invention ;
- les figures 2 et 3 sont des organigrammes illustrant un procédé mis en oeuvre par le détecteur de la figure 1 ;
- la figure 4 illustre des critères de température utilisés lors de la mise à jour de tables utilisées pour le calcul des valeurs de corrections d'offsets selon l'invention ;

- les figures 5 à 7 illustrent des étapes de calcul d'un critère de stabilité en température selon l'invention ; et
- les figures 8 et 9 illustrent respectivement un profil de température imposé aux bolomètres et le rapport bruit spatial fixe résiduel sur bruit temporel obtenu par la mise en oeuvre de l'invention lors dudit profil de température.

## DESCRIPTION DETAILLEE DE L'INVENTION

Dans ce qui suit, il est décrit un mode de réalisation privilégié de l'invention estimé optimal du point de vue de l'optimisation de la fréquence de fermeture de l'obturateur (et donc de la perte d'image) et de la précision des corrections.

On comprendra toutefois qu'il existe deux conditions distinctes de mise à jour, et cela même si elles apparaissent temporellement imbriquées dans le mode de réalisation présenté ci-dessous : une portant sur la mise à jour de la table d'offset, et une portant sur la mise à jour d'un ensemble de tables de valeurs brutes.

Bien entendu, il est possible de mener en parallèle, et de manière indépendante du point de vue de l'exécution, ces deux mises à jour.

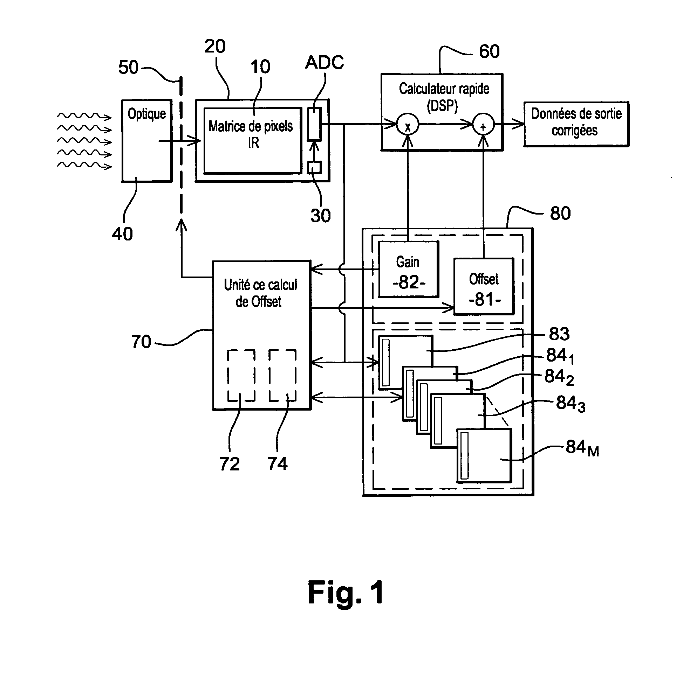

La figure 1 illustre de manière schématique un détecteur bolométrique selon l'invention Ce détecteur est non régulé en température et détecte le rayonnement d'une scène à observer dans le domaine de l'infrarouge.

Le détecteur comporte une matrice **10** de détecteurs thermiques élémentaires, ou bolomètres, comportant chacun une membrane bolométrique suspendue au dessus d'un substrat par des bras de soutien, de polarisation et d'isolation thermique.

Un circuit de lecture **20** ainsi qu'une sonde de température **30** sont par ailleurs formés dans le substrat, et les membranes suspendues des bolomètres forment ensemble une rétine matricielle disposée dans le plan focal d'une optique **40**. Un obturateur pilotable **50** est par ailleurs prévu dans le trajet optique entre l'optique **40** et la matrice **10** de bolomètres. Le circuit de lecture **20** fournit un flux vidéo numérique représentatif de l'image thermique de la scène observée formée par l'optique **40** et la sonde de température **30** fournit un signal numérisé représentatif de la température mesurée et associée au flux vidéo. La gestion des signaux de sortie du circuit **20** est par exemple réalisée par échantillonnage-bloquage puis multiplexage, d'une manière connue en soi de l'état de la technique.

L'agencement et le fonctionnement des organes venant d'être décrits sont classiques et ne seront pas expliqués plus en détail pour des raisons de concision.

Les données en sortie du circuit de lecture **20** constituent des données « brutes », c'est-à-dire sans traitement analogique ou numérique visant à corriger les défauts des bolomètres. Un pixel d'une image du flux vidéo délivrée par le circuit **20** correspond donc à la valeur brute issue d'un bolomètre.

Un circuit de calcul rapide **60,** comme par exemple un DSP (pour «_digital signal processor_ »), est raccordé à la sortie du circuit de lecture **20** et applique à chaque image de ce flux une correction d'offset et de gain afin de corriger les dispersions d'offset et de gain des bolomètres de la matrice **10**. Cette correction est classiquement désignée sous l'appellation de correction « 2 points » et est de préférence mise en oeuvre selon la relation :

$$S_{cor}(i,j) = G(i,j) \times S_{brut}(i,j) + O(i,j) \qquad (1)$$

où :

- $S_{brut}(i, J)$ est la valeur brute du pixel de coordonnées $(i, j)$ dans une image du flux vidéo en sortie du circuit **20** ;
- $S_{cor}(i, j)$ est la valeur du pixel $(i, j)$, corrigée des dispersions d'offset et de gain ;
- $O(i, j)$ est un coefficient de correction d'offset du pixel $(i, j)$, mémorisé dans une table d'offsets **81** d'une unité de mémoire **80** associé au circuit de calcul rapide **60** ; et
- $G(i, j)$ est un coefficient de correction du gain du pixel $(i, j)$, mémorisé dans une table de gains **82** de l'unité de mémoire **80**.

L'unité de mémoire **80** est capable de mémoriser également un nombre prédéterminé $\underline{M}$+1 de tables particulières de valeurs brutes appelées par la suite tables « shutter » **83, 84₁, 84₂, 84₃,..., 84_M** correspondant à des images délivrées par le circuit de lecture **20** et formées lorsque l'obturateur **50** est fermé. Chacune des tables « shutter » **83, 84₁, 84₂, 84₃,..., 84_M** est mémorisée avec des paramètres caractérisant son acquisition, notamment l'instant de celle-ci et la température mesurée par la sonde **30** lors de ladite acquisition, ainsi que des paramètres caractérisant la qualité de l'acquisition, comme cela sera expliqué plus en détail par la suite.

Une unité de maintenance et de calcul **70** est par ailleurs prévue. Cette unité, appelée par la suite simplement « unité **70** », est raccordée à l'obturateur **50,** le circuit de lecture **20,** et l'unité de mémoire **80. L'unité 70** comporte une mémoire **72** pour la mémorisation des calculs intermédiaires mise en oeuvre pour obtenir les tables de la mémoire **80** et une horloge interne **74** pour l'horodatage d'événements intervenant dans le calcul des différentes tables, comme cela sera expliqué plus en détail par la suite.

De manière privilégiée, le contenu de l'espace mémoire réservé aux tables d'offset et « shutter » de l'unité **80** est libre (indéfini ou arbitraire) à la sortie d'usine du détecteur. Les tables d'offsets **81** et les tables « shutter » **83, 84₁, 84₂, 84₃,..., 84ₙ** (N<=M) sont progressivement formées dans cet espace (acquises et mémorisées selon leur contenu initial, soit en d'autres termes, initialisées) puis mises à jour uniquement lors du fonctionnement du détecteur, sans aucune calibration préalable de celui-ci avant la toute première utilisation.

Usuellement, pour une correction deux-points mise en oeuvre par l'unité de calcul rapide **60** selon la relation (1), la table de gains **82** est calibrée en usine. Pour ce faire, une première et une seconde images en sortie du circuit de lecture **60,** respectivement d'un premier et d'un second corps noirs de température uniforme, sont acquises, le premier corps noir présentant une température inférieure à celle du second corps noir, et la matrice de bolomètre **10** étant sujette à une même température ambiante de référence.

On rappellera sur ce sujet que la température ambiante exprime ici la température à laquelle est soumis le plan focal du détecteur, et donc sa rétine. La température ambiante se distingue de la température des bolomètres qui est impactée par le rayonnement incident sur la rétine objet de la détection, et donc ne peut être utilisée comme mesure de température ambiante.

Le coefficient de correction de gain *G(i, j)* du pixel *(i, j)* est alors calculé selon la relation :

$$G(i, j) = \frac{\overline{S_1(i, j)} - \overline{S_2(i, j)}}{S_1(i, j) - S_2(i, j)} \qquad (2)$$

où :

- $S_1(i, j)$ est la valeur du pixel *(i, j)* dans la première image ;
- $S_2(i, j)$ est la valeur du pixel *(i, j)* dans la seconde image ;
- $\overline{S_1(i, j)}$ et $\overline{S_2(i, j)}$ est la valeur moyenne sur l'ensemble de la table S1 ou S2.

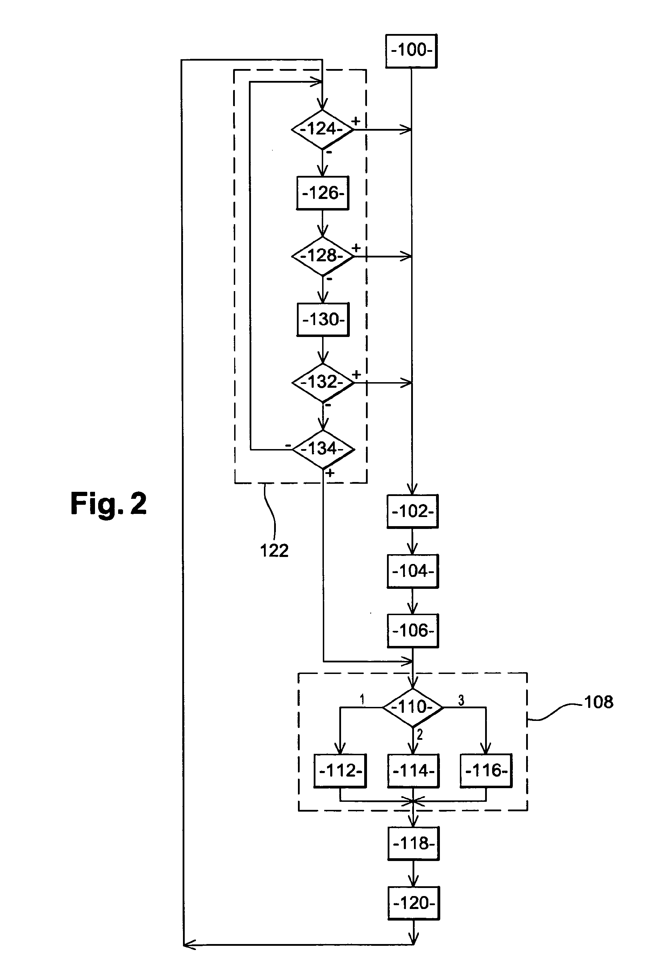

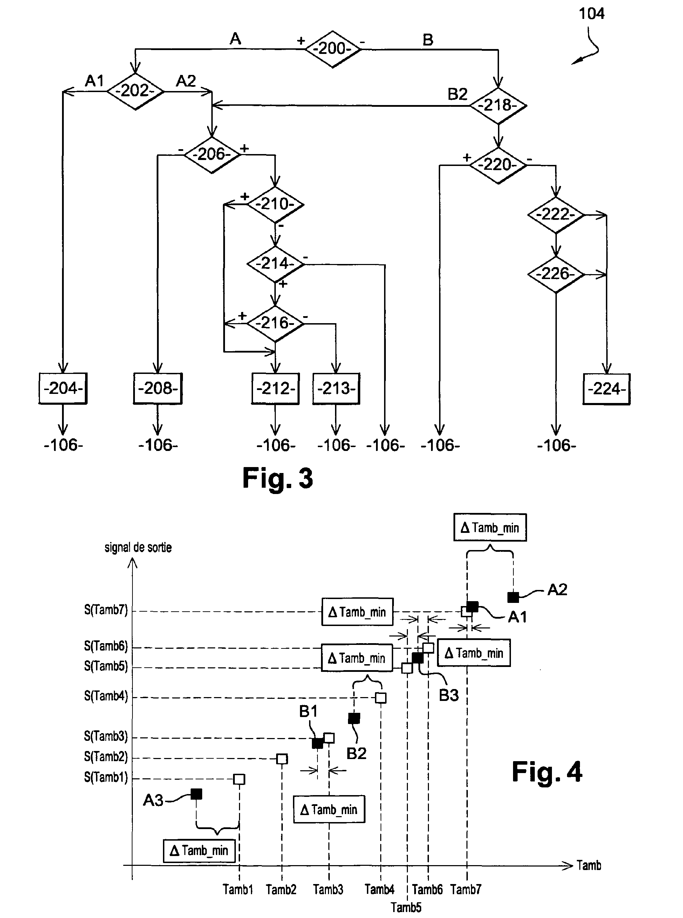

L'unité **70** gère le contenu des tables « shutter » **83, 84₁, 84₂, 84₃,.., 84ₙ** et calcule la table d'offsets **81** en fonction des tables shutter **83, 84₁, 84₂, 84₃,..., 84ₙ** en mettant en oeuvre un procédé selon l'invention, à présent décrit en relation avec les organigrammes des figures 2 et 3.

A la suite de la mise en marche du détecteur dans une étape **100,** l'unité **70** commande en **102** l'acquisition d'une nouvelle table « shutter » par la fermeture de l'obturateur **50,** et la mémorisation d'une image (une table de valeurs brutes) du flux en sortie du circuit de lecture **20** dans la mémoire **72** de l'unité **70,** la table mémorisée constituant cette nouvelle table « shutter ». Conjointement à la mémorisation de ladite table, la température $T_{amb}$ mesurée du substrat par la sonde **30** à l'instant de l'acquisition $t_{acqui}$ de la table, ainsi que cet instant sont mémorisés dans la mémoire **72**.

De manière avantageuse, des paramètres caractérisant la qualité de l'acquisition de la nouvelle table « shutter » sont également évalués et mémorisés conjointement à la nouvelle table « shutter », et plus particulièrement la stabilité de la température lors de l'acquisition. Selon l'invention la stabilité de la température lors de l'acquisition est quantifiée par un critère de stabilité, ci-après désigné « critère de stabilité en température », expliqué plus en détail par la suite.

A cet effet, en parallèle du processus de maintenance, l'unité **70** échantillonne périodiquement le signal de température, toutes les secondes typiquement, et estime à partir de cet échantillonnage temporel qui comprend l'instant d'acquisition de la nouvelle table « shutter », un paramètre dit de « stabilité de température ». Ce paramètre de stabilité est stocké par l'unité **70** dans la mémoire **72,** sous forme de paramètre associé avec la nouvelle table « shutter ».

Le procédé se poursuit alors par le remplacement, en **104,** de la table « shutter » **83** par la table nouvellement acquise et mémorisée dans la mémoire **72** de l'unité **70**. Ainsi, il est possible de le constater, la table « shutter » **83** est, parmi les tables mémorisées dans la mémoire **80,** la table la plus récente et est qualifiée de table « shutter » courante ou de table courante.

L'étape **104** se poursuit alors par une étape **106** au cours de laquelle une série de conditions de mise à jour des tables **84₁, 84₂, 84₃,..., 84ₙ** sont évaluées et celles-ci mises à jour si l'une des conditions est remplie. Plus particulièrement, il est déterminé si la table **83** doit être ajoutée aux tables **84₁, 84₂, 84₃,..., 84ₙ** déjà existantes ou si elle doit remplacer l'une de celles-ci, comme cela sera expliqué plus en détail par la suite.

Le procédé se poursuit alors par la mise à jour, en **108,** de la table d'offsets **81**. La mise à jour de la table d'offsets **81** est avantageusement mise en oeuvre à partir de l'interpolation polynomiale de la table courante **83** et de *n* tables parmi les *N* tables disponibles **84₁, 84₂, 84₃,..., 84ₙ**. Par exemple, l'invention vise à l'obtention de sept tables (M=7) **84₁, 84₂, 84₃,..., 84₇,** mais l'interpolation est réalisée à un instant où cinq tables **84₁, 84₂, ..., 84₅** sont disponibles, en fonction de la table courante **83** et de deux tables choisies dans la série **84₁, 84₂, 84₃,..., 84₅** soit une interpolation entre trois tables « shutter ». Il est entendu qu'au bout d'un temps total de fonctionnement suffisant du détecteur, le nombre de tables N atteint le nombre prédéterminé M = 7, et deux tables sont choisies parmi sept dans la série **84₁, 84₂, 84₃,..., 84₇** pour l'interpolation.

L'unité **70** lit alors la mesure de la température « actuelle » (à l'instant considéré) délivrée par la sonde **30** et évalue en fonction de celle-ci par interpolation chaque élément d'une table dite « interpolée » qui est mémorisée dans la mémoire **72** de l'unité **70**.

Si le nombre de tables « shutter » **84₁, 84₂, 84₃,..., 84_N** n'est pas encore suffisant pour l'interpolation polynomiale, comme cela est le cas lors de la première mise en marche du détecteur par exemple si aucune table par défaut n'est pré-mémorisée en usine, le degré de l'interpolation est adapté au nombre de tables présentes dans l'unité de mémoire **80**.

Ainsi, si seulement la table courante **83** est présente dans l'unité de mémoire **80**, la table interpolée est réglée, en **112**, comme étant égale à la table courante **83** (branche « 1 » de l'étape de test **110** sur le nombre de tables présentes dans l'unité de mémoire **80**). Si deux tables (en l'occurrence, **83** et **84₁**) sont présentes dans l'unité de mémoire **80**, une interpolation du premier ordre est mise en oeuvre en **114** (branche « 2 » de l'étape de test **110**). Sinon, une interpolation du second ordre est mise en oeuvre, en **116**, lorsque l'unité de mémoire **80** contient au moins trois tables « shutter » (en l'occurrence, **83**, **84₁** et **84₂** ; branche « 3 » de l'étape de test **110**).

Dans le cas où l'unité de mémoire **80** est alimentée avant mise en service en usine par au moins deux tables par défaut **84₁** et **84₂**, il n'est avantageusement plus besoin des branches « 1 » et « 2 » dans l'étape de test **110**.

Les _n_ tables « shutter » sélectionnées parmi les _N_ tables mémorisées sont choisies en fonction de la température d'acquisition des tables et/ou en fonction de leur température par rapport aux températures des tables voisines et/ou en fonction de leur stabilité en température. D'autres types de critères peuvent cependant être utilisés dans la sélection des tables « shutter » destinées au calcul d'interpolation.

On notera que puisque la table courante **83** est régulièrement et/ou périodiquement mise à jour, comme cela sera expliqué ci-après, on peut s'interroger sur la nécessité d'une interpolation, et donc _in fine,_ de la nécessité d'acquérir et mémoriser des tables « shutter» **84₁, 84₂, 84₃,..., 84_N**, surtout considérant que les interpolations sont grandes utilisatrices de ressources de calcul. Or, une petite variation de la température ambiante (quelques dixièmes de degré par exemple) provoque une grande variation de la valeur brute du signal en sortie du circuit **20**, d'où l'utilité d'interpoler à la température ambiante « actuelle », à partir de la table shutter **83** dernièrement acquise, une table plus précise destinée au calcul de la table d'offsets. En outre, il n'est pas avantageux de mettre à jour la table courante **83** très souvent, puisque pendant la fermeture de l'obturateur **50** le détecteur n'est pas opérationnel.

Une fois l'interpolation terminée, le procédé se poursuit, en **118**, par le calcul d'une nouvelle table d'offsets **81** en fonction de la table interpolée obtenue. Chaque élément _(i, j)_ de table d'offsets **81** est préférentiellement mis à jour selon la relation :

$$O(i,j) = \overline{S_{int\,erp}} - G(i,j) \times S_{int\,erp}(i,j)$$

où :

- $S_{int\,erp}(i, j)$ est la valeur de table interpolée $S_{int\,erp}$ pour l'élément _(i, j)_ de celle-ci ; et
- $\overline{S_{int\,erp}}$ est la moyenne des éléments de la table interpolée $S_{int\,erp}$.

Les valeurs $O(i, j)$ sont stockées à mesure que le calcul progresse dans une table temporaire mémorisée dans la mémoire **72** de l'unité **70**, puis cette table temporaire remplace, en **120**, la table **81** lorsque tous ses éléments sont calculés. La nouvelle table d'offsets **81** est alors utilisée pour la correction du flux vidéo en sortie du circuit de lecture **20**.

L'étape 120 se poursuit alors par une étape **122** d'évaluation d'une condition de mise à jour de la table d'offsets **81**. Si la mise à jour de celle-ci est automatiquement déclenchée suite à la mise en marche du détecteur, les conditions de fonctionnement de celui-ci, et notamment les conditions de température et l'état de fonctionnement des bolomètres peuvent varier au cours de l'utilisation du détecteur.

Plus particulièrement, lors d'une étape **124**, un test est mis en oeuvre pour statuer si l'utilisateur a requis une mise à jour de la table d'offsets **81**. Cette requête peut par exemple être formulée par l'activation d'une commande spécialement prévue à cet effet sur le boitier du détecteur, ou bien via une interface homme/machine (« IHM ») équipant celui-ci. Si une telle requête est formulée, l'étape **108** de mise à jour de la table d'offsets est alors déclenchée.

L'utilisateur peut aussi demander l'acquisition d'une nouvelle table shutter à l'aide d'une autre commande IHM à l'étape **125.** Si une telle requête est formulée, l'étape **102** d'acquisition d'une nouvelle table shutter est alors déclenchée.

Sinon, une lecture de l'horloge **74** de l'unité **70** est réalisée en **126,** puis la valeur lue de l'horloge est comparée, en **128,** avec l'instant d'acquisition de la table courante **83** mémorisé conjointement avec celle-ci. Ainsi, si le temps écoulé depuis la dernière mise à jour de la table courante **83,** et donc de la table d'offsets **81** dans le mode de réalisation décrit, excède une durée prédéterminée $\Delta t$_min, par exemple égale à 15 minutes, l'étape **102** d'acquisition d'une nouvelle table « shutter » **83** est alors déclenchée.

Si tel n'est pas le cas, une lecture de la température actuelle mesurée par la sonde **30** est alors réalisée en **130,** puis la température mesurée est comparée, en **132,** à la température d'acquisition de la table courante **83** conjointement mémorisée avec celle-ci. Si l'écart en valeur absolue entre ces deux températures excède un premier seuil prédéterminé $\Delta Tamb\_shut\_min$, par exemple égale à 1°C, l'étape **102** d'acquisition d'une nouvelle table shutter **83** est alors déclenchée.

Sinon, l'écart en valeur absolue des deux températures est comparé, en **134,** à un second seuil prédéterminé $\Delta Tamb\_int\_min$ , inférieur au premier seuil $\Delta Tamb\_shut\_min$ et égal à quelques dixièmes de degrés, par exemple 0,2°C. Si l'écart est inférieur au second seuil $\Delta Tamb\_shut\_min$, le procédé boucle alors sur l'étape **124** pour une nouvelle évaluation de la condition de mise à jour de la table d'offsets **81.**

Par contre, si l'écart est supérieur au second seuil $\Delta Tamb\_shut\_min$, le procédé boucle sur l'étape **108** d'interpolation afin de calculer une nouvelle table d'interpolation (et donc par la suite une nouvelle table d'offsets **83**) pour la température actuelle mesurée par la sonde **30,** qui est différente de celle de la table courante **83** et donc de la température à laquelle la table d'offsets **81** actuellement mémorisée a été calculée.

Ainsi, comme on peut le constater, la table d'offsets **81** est mise à jour dès lors que sa validité est remise en cause, par exemple en raison de sa trop grande ancienneté ou d'une variation importante de température.

Il va à présent être décrit en relation avec l'organigramme de la figure 3 et le tracé de la figure 4 la condition de maintenance des tables « shutter » $84_1$, $84_2$, $84_3$,..., $84_N$ ainsi que la manière dont celles-ci sont maintenues, mise en oeuvre dans l'étape **104.**

La figure 4 illustre plus particulièrement les différents critères de température utilisés pour la maintenance des tables $84_1$, $84_2$, $84_3$,..., $84_N$. Pour des raisons de simplicité, sans que cela ne soit dommageable pour la compréhension de l'invention, les tables « shutter » de l'ensemble mémorisé sont ici représentées sur l'axe des ordonnées par un scalaire (qui représente la valeur brute arbitraire d'un bolomètre quelconque), l'abscisse représentant leur température d'acquisition associée. Enfin, les carrés blancs désignent les tables $84_1$, $84_2$, $84_3$,..., $84_N$ et les carrés noirs différents cas de tables courantes **83.**

Enfin, cette figure illustre le cas d'au moins deux tables « shutter » $84_1$, $84_2$, $84_3$,...,, $84_N$ acquises. Comme on l'a déjà signalé, il en est avantageusement ainsi dès la mise en service initiale du détecteur, si deux tables par défaut $84_1$ et $84_2$ sont pré-mémorisées en usine.

Dans le cas où il n'y a qu'une seule table mémorisée $84_1$, une acquisition shutter est déclenchée en **102,** et la table nouvellement acquise est mémorisée comme table courante **83** à l'étape **106.** Ensuite, le test **200** de l'étape **104** provoque le branchement « A » vers l'étape **104** détaillée plus loin dans le cas général.

Dans le cas où le détecteur est mis en marche pour la première fois, aucune table « shutter » n'est mémorisée dans la mémoire **80.** Une première acquisition est déclenchée en **102,** et la table « shutter » nouvellement acquise est mémorisée comme table courante **83** à l'étape **106.** Lors de la mise à jour des tables « shutter » en **104,** la table **83** est alors mémorisée (recopiée) comme première table « shutter » $84_1$.

L'étape **104** débute, en **200,** par un test d'appartenance de la température d'acquisition de la table courante **83** à l'intervalle de température défini par la température la plus basse et la température la plus haute associées aux tables « shutter » $84_1$, $84_2$, $84_3$,..., $84_N$.

Si la température d'acquisition n'appartient pas audit intervalle (branche « A » du test **200**), un nouveau test est mis en oeuvre, en **202,** pour décider si l'écart en valeur absolue, entre la température d'acquisition de la table courante **83** et la température d'acquisition la plus proche parmi les températures des tables $84_1$, $84_2$, $84_3$,..., $84_N$, est inférieur à un premier seuil de température $\Delta Tamb\_min$ .

Si tel est le cas (branche « A1 » du test **202**), la table courante **83** est substituée à (est recopiée dans) la table « shutter » de température la plus proche. Le seuil de température $\Delta Tamb\_min$ est toujours inférieur au seuil $\Delta Tamb\_shut\_min$, et il est de préférence choisi de l'ordre de 0.9°C pour une valeur de $\Delta Tamb\_shut\_min$ égale à 1°C.

En variante, ce seuil peut être variable en fonction notamment de l'intervalle de températures de fonctionnement du détecteur, du nombre nominal M de tables shutter $84_1$, $84_2$, $84_3$,..., $84_M$ selon lequel le détecteur est censé fonctionner, et du seuil $\Delta Tamb\_shut\_min$ *sur* l'écart en température entre deux acquisitions de la table courante.

sSi l'écart en valeur absolue entre la température de la table **83** et la température la plus proche des tables $84_1$, $84_2$, $84_3$,..., $84_N$ est supérieur au seuil $\Delta Tamb\_min$ (branche « A2 » du test **202**), un test est mis en oeuvre, en **206,** pour statuer si le nombre de tables $84_1$, $84_2$, $84_3$,..., $84_N$ acquises jusqu'à l'instant présent est égal au nombre M de tables « shutter » visé. Si tel n'est pas le cas, la table courante **83** est alors ajoutée, en **208,** aux tables $84_1$, $84_2$, $84_3$,..., $84_N$ déjà acquises.

Si $M$ tables « shutter » $84_1, 84_2, 84_3,..., 84_N$ ont d'ores et déjà été acquises (N=M), le procédé se poursuit par l'évaluation d'une condition de remplacement de l'une d'entre elles par copie de la table courante **83**.

Plus particulièrement, la table « shutter » à remplacer sera sélectionnée selon son taux d'obsolescence. Ledit taux d'obsolescence d'une table « shutter » sera par exemple estimé sous la forme du nombre de démarrages du détecteur depuis l'acquisition de ladite table. Ce nombre est mis à jour par incrémentation à chaque nouveau démarrage. Un test est mis en oeuvre en **210** pour statuer si une table « shutter » $84_1, 84_2, 84_3,..., 84_N$ est associée à un nombre de démarrages supérieur à un seuil prédéterminé.

La table « shutter » ainsi sélectionnée est remplacée, en **212,** par la table courante **83**. Ainsi, on s'assure que les tables «shutter» $84_1, 84_2, 84_3,..., 84_N$ sont suffisamment récentes pour être jugées pertinentes pour le calcul de la table d'offset **81**. On sait en effet que les caractéristiques des bolomètres, et notamment leurs offsets, subissent une dérive très lente au cours du temps. Pour une même température, les offsets varient donc dans le temps de sorte qu'il est avantageux de privilégier les tables « shutter » récentes comme base de leur calcul.

Si toutes les tables «shutter» $84_1, 84_2, 84_3,..., 84_N$ sont considérées comme suffisamment récentes, un test est alors mis en oeuvre en **214** pour statuer si le critère de stabilité en température de la table courante **83** est supérieur au plus faible des critères de stabilité des tables «shutter» $84_1, 84_2, 84_3,..., 84_N$, qualifiant ainsi le fait que les conditions d'acquisition de la table **83** ont été meilleures que celles de la table « shutter » présentant le critère le plus faible, et que la table courante **83** s'avère donc plus pertinente que cette dernière.

Un exemple de critère de stabilité en température est à présent décrit en relation avec la figure 5.

Comme cela a été précédemment décrit, la température ambiante *Tamb* est acquise périodiquement, par exemple toutes les secondes, par la sonde **30,** et cela indépendamment et en parallèle de l'acquisition de nouvelles tables «shutter» et de la mise à jour de la table d'offsets. La dérive temporelle $\dfrac{dTamb}{dt}$ (figure 5), ainsi que les valeurs *Sb* et *S* décrites ci-après, sont aussi calculées suite à l'acquisition de la température *Tamb* par la sonde **30** et mémorisées dans la mémoire 72.

Lorsque la dérivée temporelle de la température $\dfrac{dTamb}{dt}$ est comprise dans un intervalle prédéterminé $[-\Delta S;+A S]$, une variable *Sb* est réglée à une valeur positive prédéterminée $\alpha$, et sinon à une valeur négative prédéterminée $\beta$ (figure 6). La variable *Sb* est alors intégrée temporellement et bornée entre les valeurs 0 et 100, l'évolution de l'intégrale *S* de la variable *Sb* étant illustrée à la figure 7. La valeur « 0 » de l'intégrale *S* qualifie ainsi une stabilité de la température lors de l'acquisition comme particulièrement mauvaise alors que la valeur « 100 » de l'intégrale *S* qualifie une stabilité particulièrement bonne. De manière privilégiée, la valeur $\beta$ est supérieure en valeur absolue à la valeur $\alpha$. Ainsi l'intégrale *S* décroit plus vite qu'elle ne croit afin de donner plus de poids aux valeurs de la dérivée $\dfrac{dTamb}{dt}$ non comprises dans l'intervalle $[-\Delta S;+\Delta S]$. Ainsi par exemple, il faut 10 minutes à la variable *S* pour atteindre la borne supérieure 100 en partant de 0, et 3 minutes pour atteindre la borne inférieure 0 en partant de 100.

La valeur du critère de stabilité en température de la table « shutter » acquise est alors par exemple donnée par la valeur de la variable *S* à l'instant d'acquisition *t_acgui*, 80 dans l'exemple de la figure 7.

En se référant de nouveau à la figure 3, à l'étape **214** il est statué si le critère de stabilité de la table courante **83** est supérieur au plus faible des critères de stabilité de toutes les tables « shutter » mémorisées $84_1, 84_2, 84_3,..., 84_N$.

Si tel n'est pas le cas, la table courante **83** n'est pas mémorisée durablement dans une table « shutter » $84_1, 84_2, 84_3,..., 84_N$. La table **83** est seulement utilisée pour le calcul des interpolations suivantes, jusqu'à la prochaine acquisition, en **102**, d'une table « shutter » qui la remplacera en **104**.

Si tel est le cas, la table courante **83** remplace par copie une des tables « shutter » $84_1, 84_2, 84_3,..., 84_N$. Afin de sélectionner la table « shutter » à remplacer, un autre test est mis en oeuvre en **216** pour statuer s'il existe une unique table avec un critère de stabilité inférieur ou égal au critère de stabilité de la table courante **83**. Si tel est le cas, c'est cette unique table « shutter » qui est remplacée en **212** par la table courante **83**. Si tel n'est pas le cas, c'est-à-dire qu'il existe plusieurs tables « shutter » présentant un critère de stabilité inférieur ou égal à celui de la table courante **83,** la table «shutter» ayant l'instant d'acquisition le plus ancien parmi ces tables est remplacée en **213** par la table courante **83.**

L'ordre temporel d'acquisition des tables « shutter » $84_1, 84_2, 84_3,.... 84_N$ est par exemple repéré par un numéro qui est incrémenté pour toutes les tables lorsqu'une des tables est ajoutée ou remplacée. Le numéro le plus élevé correspond alors à la table la plus anciennement acquise.

Si la température d'acquisition de la table courante **83** est dans l'intervalle de température défini par la température la plus basse et la température la plus haute associées aux tables « shutter » $84_1, 84_2, 84_3,..., 84_N$ (branche « B » du test **200**), un test est mis en oeuvre, en **218,** pour statuer si la température d'acquisition de la table courante **83** s'écarte, en valeur absolue, de toutes les températures des tables « shutter » $84_1, 84_2, 84_3,..., 84_N$ d'au moins le seuil Δ*Tamb*_min. Si tel est le cas (branche « B2 » du test **218**), le procédé boucle sur l'étape de test **206** pour statuer sur l'ajout ou le remplacement d'une table.

Si tel n'est pas le cas (branche « B1 » du test **218**), c'est-à-dire qu'il existe au moins une table « shutter » » **84₁, 84₂, 84₃,..., 84_N** proche en température de la table courante **83** de moins de Δ*Tamb*_min, un test est alors mis en oeuvre, en **220,** pour statuer si le nombre de table « shutter » **84₁, 84₂, 84₃,..., 84_N** proches en température de la table courante **83** de moins de Δ*Tamb*_min est supérieur ou égal à deux. Si tel est le cas, aucun remplacement des tables « shutter» **84₁, 84₂, 84₃,..., 84_N** par la table courante **83** n'est effectué.

Sinon, c'est-à-dire qu'une seule des tables « shutter » **84₁, 84₂, 84₃,..., 84_N** est proche en température de la table courante **83** de moins de Δ*Tamb*_min, un test analogue au test **210** sur l'ancienneté est mis en oeuvre en **222** pour le remplacement, en **224,** de la table la plus ancienne, réalisé de manière analogue à celle décrite précédemment.

Dans le cas où le critère d'ancienneté n'est pas retenu, un test analogue à celui mis en oeuvre lors du test **214,** est mis en oeuvre en **226**. Le remplacement, en **224,** de la table « shutter » sur le critère de stabilité en température est alors réalisé de manière analogue à celle décrite précédemment.

Des expériences ont été menées pour asseoir le bien fondé de l'invention.

Notamment, un détecteur selon l'invention a été disposé devant un corps noir de température uniforme de 40°C, en soumettant son plan focal à un profil de température illustré par la figure 8, après installation à l'intérieur d'une enceinte climatique. Comme on peut le constater, la température du plan focal varie de -15°C à +60°C par paliers de température successifs, avec des pentes de raccordement entre paliers de l'ordre de ± 1,5°C/min.

La table d'offsets a été mise à jour toutes les 15 minutes et/ou lors de chaque mesure d'une variation de température de 1°C, la mise à jour des tables « shutter » et de la table d'offsets ayant été mise en oeuvre de la manière précédemment décrite : fermeture de l'obturateur, acquisition de la nouvelles table courante, maintenance des tables « shutter », etc...).

Le critère retenu pour qualifier l'effcacité du procédé selon l'invention, est le ratio bruit spatial fixe résiduel (communément désigné par « BSFR ») sur le bruit temporel (communément désigné par « BRMS »). La figure 9 illustre ce ratio au cours du cycle de température de la figure 8, à la fois selon l'état de la technique utilisant des tables d'offset calibrées en usine et selon l'invention. Comme on peut le constater, le ratio BSFR/BRMS selon l'invention est sensiblement égal au ratio BSFR/BRMS de l'état de la technique, et varie entre 1 et 2, ce qui représente un résultat très satisfaisant et démontre ainsi l'efficacité de procédé de correction selon l'invention.

Il a été décrit un mode de réalisation mettant en oeuvre une correction « 2 points ». En variante, une correction dite « 1 point » est mise en oeuvre et ne corrige que la dispersion des offsets. Dans ce cas, la table de gains **82** est omise.

De même, plusieurs températures peuvent être acquises en différents points du détecteur (par exemple une mesure en un point du substrat, une mesure en un point du boitier accueillant la rétine et le substrat, etc.) afin de mieux appréhender les phénomènes transitoires en température. Dans un tel cas, l'interpolation des tables est multidimensionnelle.

De même, il a été décrit un ordre privilégié des critères de maintenance des tables « shutter » (écart de température, obsolescence, stabilité, ancienneté relative). Bien entendu un autre ordre peut être choisi.

De même, d'autres critères peuvent être utilisés.

Grâce à l'invention, il est ainsi obtenu les avantages suivants :

- un fonctionnement du détecteur sans régulation de température sur une large gamme de températures ;
- une calibration en usine très simple et très rapide, car elle ne nécessite notamment pas de passage en enceinte thermostatée, et donc de stabilisation par paliers de longue durée à différentes températures ambiantes *Tamb.* Par conséquent le temps de calibration du détecteur est fortement réduit par rapport aux détecteurs de l'état de la technique utilisant des tables d'offsets précalibrées. La calibration se réduit notamment dans le cas d'une correction « 2 points » à la calibration d'une seule table de gain. Il s'ensuit ainsi des coûts d'équipement et d'exploitation réduits, et donc des coûts de fabrications sensiblement diminués des détecteurs ;
- l'interpolation des tables « shutter » à différentes températures et la maintenance récurrente de ces tables permettent notamment :

  o d'obtenir des images de bonne qualité, pour une fréquence de fermeture de l'obturateur réduite au nécessaire, c'est-à-dire pour une fréquence de perte d'image faible ;
  o de gérer les transitions de la température de la rétine en conservant des images peu dispersées spatialement pendant ces transitions ;
  o de produire des images corrigées dont la qualité est indépendante des dérives spatiales (c'est-à-dire d'un bolomètre à un autre), ou des dérives globales temporelles de la matrice de bolomètres issue d'une calibration classique d'offsets, ainsi que des dérives liées à son électronique de pilotage ;

- l'utilisation d'une table de correction de gains unique pour toutes les températures simplifie et accélère les calculs ;

■ le circuit de lecture mis en oeuvre par le détecteur selon l'invention est de complexité limitée, sans complication particulière propre à nuire au rendement de fabrication. En outre, la capacité des mémoires nécessaires à la mise en oeuvre de l'invention est limitée au strict nécessaire, ce qui réduit le coût et la complexité du système complet.

## Revendications

1. Procédé de correction des images délivrées par une matrice de bolomètres (10) d'un détecteur non régulé en température, ladite matrice (10) comportant une rétine de membranes bolométriques agencée dans le plan focal d'une optique (40), suspendue au dessus d'un substrat dans lequel est formé un circuit de lecture (20) apte à fournir en sortie un flux de valeurs brutes de signal correspondant à chaque bolomètre de la matrice (10) en relation avec une scène observée, le détecteur comprenant en outre un obturateur (50) agencé entre l'optique (40) et la rétine, le procédé comportant, lors d'un mode de fonctionnement dans lequel les conditions de températures ambiantes du détecteur sont libres d'évoluer :

   ■ une première étape (102) de fermeture de l'obturateur (50), et d'acquisition et de mémorisation dans une mémoire (80) du détecteur :

      ○ d'une table courante de valeurs brutes (83) correspondant à une image de l'obturateur (50) par la matrice de bolomètres (10); et
      ○ d'une température du détecteur lors de l'acquisition de ladite table de valeurs brutes courante (83),

   ■ une seconde étape (108) de détermination et de mémorisation dans la mémoire (80) du détecteur d'une table de corrections d'offsets (81) pour la température actuelle du détecteur en fonction :

      ○ de la table courante de valeurs brutes (83) et de la température associée ; et
      ○ d'un ensemble courant de tables de valeurs brutes ($84_1$, $84_2$, $84_3$, $84_M$) correspondant à des images de l'obturateur (50) par la matrice de bolomètres (10), préalablement mémorisées dans la mémoire (80) du détecteur, et des températures du détecteur associées respectivement à chacune de ces tables ($84_1$, $84_2$, $84_3$, $84_M$) lors de leurs acquisitions, lesdites températures étant mémorisées dans la mémoire (80) du détecteur ; et

   ■ une troisième étape (60) de correction du flux de valeurs brutes au moyen de la table de corrections d'offsets (81),
   *caractérisé* en ce qu'il comporte, consécutivement à l'acquisition d'une table courante de valeurs brutes (83), un processus de maintenance (104) de l'ensemble courant de tables de valeurs brutes ($84_1$, $84_2$, $84_3$, $84_M$), comprenant :
   ■ le test d'une condition de remplacement d'une table dudit ensemble courant ($84_1$, $84_2$, $84_3$, $84_M$) par la table courante de valeurs brutes (83); et
   ■ si ladite condition est satisfaite, le remplacement de la table dudit ensemble courant de tables ($84_1$, $84_2$, $84_3$, $84_M$) par la table courante de valeurs brutes (83), et le remplacement de la température d'acquisition de la table remplacée par la température d'acquisition de la table courante de valeurs brutes (83),
   ledit test consistant à déterminer sur la base d'au moins un critère prédéterminé s'il existe un nouvel ensemble de tables, issu du remplacement d'une table de l'ensemble courant ($84_1$, $84_2$, $84_3$, $84_M$) par la table courante (83), plus pertinent que l'ensemble courant vis-à-vis d'une détermination ultérieure de la table d'offsets (81).

2. Procédé selon la revendication 1, *caractérisé* en ce que l'ensemble courant de tables mémorisées ($84_1$, $84_2$, $84_3$, $84_M$) est partiellement ou totalement construit en fonction de tables courantes (83) acquises lors du fonctionnement du détecteur.

3. Procédé selon l'une des revendications 1 et 2, *caractérise* en ce que le au moins critère comprend un critère relatif à la pertinence de ces tables ($84_1$, $84_2$, $84_3$, $84_M$) vis-à-vis de l'état de fonctionnement courant du détecteur, notamment un critère relatif à l'ancienneté de leur acquisition et/ou un critère relatif à la stabilité de la température du détecteur lors de l'acquisition desdites tables de valeurs brutes ($84_1$, $84_2$, $84_3$, $84_M$).

4. Procédé selon la revendication 1, *caractérisé* en ce que le au moins un critère comporte un critère relatif à la répartition des températures auxquelles les tables (83, $84_1$, $84_2$, $84_3$, $84_M$) ont été acquises, la mise à jour de l'ensemble mémorisé de valeurs brutes ($84_1$, $84_2$, $84_3$, $84_M$) visant à une répartition régulière des températures à l'intérieur d'un intervalle de températures dans lequel se trouve le détecteur au cours de son fonctionnement.

5. Procédé selon l'une quelconque des revendications précédentes, *caractérisé* **en ce qu'**il comporte en outre l'évaluation (122) d'une première condition de mise à jour de la table de corrections d'offsets (81), la satisfaction de ladite première condition déclenchant :

- la fermeture de l'obturateur (50), l'acquisition (102) d'une table courante de valeurs brutes (83), et le processus (104) de maintenance de l'ensemble courant des tables mémorisées ($84_1$, $84_2$, $84_3$, $84_M$) ; et
- le calcul (108) d'une nouvelle table de corrections d'offsets (81) en fonction de la table courante de valeurs brutes (83) et de l'ensemble de tables de valeurs brutes mémorisées ($84_1$, $84_2$, $84_3$, $84_M$).

6. Procédé selon la revendication 5, *caractérisé* **en ce que** la première condition de mise à jour de la table de corrections d'offsets (81) comporte un critère relatif à l'ancienneté de la table courante de valeurs brutes (83), ladite première condition étant notamment satisfaite lorsque l'ancienneté de ladite table courante est supérieure à une durée prédéterminée.

7. Procédé selon l'une des revendications 5 et 6, *caractérisé* **en ce que** la première condition de mise à jour de la table de corrections d'offsets (81) comporte un critère relatif à l'écart entre la température actuelle du détecteur et la température du détecteur associée à la table courante de valeurs brutes (83), ladite première condition étant notamment satisfaite lorsque ledit écart est supérieur à un premier seuil prédéterminé.

8. Procédé selon l'une des revendications 5 à 7, *caractérisé* **en ce qu'**il comporte en outre l'évaluation d'une deuxième condition de mise à jour de la table de corrections d'offsets (81), la satisfaction de ladite deuxième condition de mise à jour déclenchant :

- la fermeture de l'obturateur (50) et l'acquisition (102) d'une table courante de valeurs brutes (83) ; et
- le calcul (108) d'une nouvelle table de corrections d'offsets (81) en fonction de la table courante de valeurs brutes (83) et de l'ensemble de tables de valeurs brutes mémorisées ($84_1$, $84_2$, $84_3$, $84_M$).

9. Procédé selon la revendication 8, *caractérisé* **en ce que** la deuxième condition de mise à jour de la table de corrections d'offsets (81) comporte un critère relatif à l'écart entre la température actuelle du détecteur et la température du détecteur associée au dernier calcul de la tables de corrections d'offsets (81), ladite deuxième condition étant notamment satisfaite lorsque ledit écart est supérieur à un deuxième seuil prédéterminé inférieur au premier seuil.

10. Procédé selon l'une quelconque des revendications 5 à 9, *caractérisé* **en ce que** la mise à jour de la table de corrections d'offsets (81) comporte le calcul (108) d'une table interpolée de valeurs brutes par interpolation de la table courante de valeurs brutes (83) et d'un nombre prédéterminé de tables de l'ensemble de tables de valeurs brutes mémorisées ($84_1$, $84_2$, $84_3$, $84_M$), et **en ce que** le calcul de la table de corrections d'offsets (81) est réalisé selon la relation :

$$O_n = \overline{S_{\text{int } erp}(Tamb)} - G_n \times S_{\text{int } erp}(Tamb)_n$$

où $O_n$ est une valeur de la table de corrections d'offsets, $\overline{S_{\text{int } erp}(Tamb)}$ est la valeur moyenne de la table interpolée de valeurs brutes, $G_n$ est un coefficient prédéterminé de correction du gain du bolomètre correspondant à ladite valeur $O_n$, et $S_{\text{int } erp}(Tamb)_n$ est la valeur brute correspondant à ladite valeur $O_n$ de la table interpolée.

11. Détecteur thermique non régulé en température, comprenant :

- une matrice de bolomètres (10) comprenant une rétine de membranes bolométriques, suspendue au dessus d'un substrat (20) dans lequel est formé un circuit de lecture (20) apte à fournir en sortie un flux de valeurs brutes de signal correspondant à chaque bolomètre de la matrice (10) en relation avec une scène observée, et agencée dans le plan focal d'une optique (40) ;
- au moins une sonde de température (30) apte à mesurer la température en un point du substrat ;

- un obturateur pilotable (50) apte à former une scène uniforme pour la rétine; et

  *caractérisé* **en ce qu'**il comporte des moyens (60, 70, 80) de traitement d'informations et de mémorisation, aptes à mettre en oeuvre un procédé conforme à l'une quelconque des revendications précédentes.

**Patentansprüche**

1. Verfahren zur Korrektur von Bildern, die von einer Matrix aus Bolometern (10) eines nicht temperaturgeregelten Detektors geliefert werden, wobei die Matrix eine Netzhaut aus bolometrischen Membranen umfasst, die in der Brennebene einer Optik (40) angeordnet ist, die über einem Substrat aufgehängt ist, in dem eine Leseschaltung (20) ausgebildet ist, die dazu ausgebildet ist am Ausgang einen Signalrohwerteverlauf entsprechend jedem Bolometer der Matrix (10) im Zusammenhang mit einer beobachteten Szene auszugeben, wobei der Detektor darüber hinaus eine Verschlusseinrichtung (50) umfasst, die zwischen der Optik (40) und der Netzhaut angeordnet ist, wobei das Verfahren während einer Betriebsart, bei der sich die Umgebungstemperaturbedingungen des Detektors frei entwickeln können, umfasst:

   - einen ersten Schritt (102) zum Schließen der Verschlusseinrichtung (50) und zum Erfassen und Speichern in einem Speicher (80) des Detektors:

      ∘ einer aktuelle Rohwertetabelle (83), die einem Bild des Verschlusses (50) durch die Matrix aus Bolometern (10) entspricht; und
      ∘ einer Temperatur des Detektors bei der Erfassung der aktuellen Rohwertetabelle (83),

   - einen zweiten Schritt (108) zur Bestimmung und Speicherung im Speicher (80) des Detektors einer Versatzkorrekturentabelle (81) für die tatsächliche Temperatur des Detektors in Abhängigkeit von:

      ∘ der aktuellen Rohwertetabelle (83) und der damit assoziierten Temperatur; und
      ∘ einer aktuellen Einheit von Rohwertetabellen ($84_1$, $84_2$, $84_3$, $84_M$), die Bildern des Verschlusses (50) durch die Matrix aus Bolometern (10), die zuvor im Speicher (80) des Detektors gespeichert wurden, und den Temperaturen des Detektors entsprechen, die jeweils mit jeder dieser Tabellen ($84_1$, $84_2$, $84_3$, $84_M$) bei ihren Erfassungen assoziiert sind, wobei die Temperaturen im Speicher (80) des Detektors gespeichert sind; und

   - einen dritten Schritt (60) zur Korrektur des Rohwerteverlaufs mittels der Versatzkorrekturentabelle (81), **dadurch gekennzeichnet, dass** es auf die Erfassung einer aktuellen Rohwertetabelle (83) folgend einen Pflegeprozess (104) für die aktuelle Einheit von Rohwertetabellen ($84_1$, $84_2$, $84_3$, $84_M$) umfasst, Folgendes umfassend:

      - den Test einer Austauschbedingung einer Tabelle der aktuellen Einheit ($84_1$, $84_2$, $84_3$, $84_M$) durch die aktuelle Rohwertetabelle (83); und
      - wenn die Bedingung erfüllt ist, den Austausch der Tabelle der aktuellen Einheit von Tabellen ($84_1$, $84_2$, $84_3$, $84_M$) durch die aktuelle Rohwertetabelle (83), und den Austausch der Erfassungstemperatur der ausgetauschten Tabelle durch die Erfassungstemperatur der aktuellen Rohwertetabelle (83),
      wobei der Test darin besteht, auf Grundlage mindestens eines vorbestimmten Kriteriums zu bestimmen, ob es eine neue Einheit von Tabellen gibt, die sich aus dem Austausch einer Tabelle der aktuellen Einheit ($84_1$, $84_2$, $84_3$, $84_M$) durch die aktuelle Tabelle (83) ergeben hat, die gegenüber einer späteren Bestimmung der Versatztabelle (81) relevanter ist als die aktuelle Einheit.

2. Verfahren nach Anspruch 1, **dadurch gekennzeichnet, dass** die aktuelle Einheit gespeicherter Tabellen ($84_1$, $84_2$, $84_3$, $84_M$) teilweise oder ganz in Abhängigkeit von aktuellen Tabellen (83) aufgebaut wird, die beim Betrieb des Detektors erfasst werden.

3. Verfahren nach einem der Ansprüche 1 und 2, **dadurch gekennzeichnet, dass** das mindestens eine Kriterium ein Kriterium umfasst, das sich auf die Relevanz dieser Tabellen ($84_1$, $84_2$, $84_3$, $84_M$) gegenüber dem aktuellen Betriebszustand des Detektors bezieht, insbesondere ein Kriterium, das sich auf das zeitliche Bestehen ihrer Erfassung bezieht, und/oder ein Kriterium umfasst, das sich auf die Stabilität der Temperatur des Detektors bei der Erfassung der Rohwertetabellen ($84_1$, $84_2$, $84_3$, $84_M$) bezieht.

**4.** Verfahren nach Anspruch 1, **dadurch gekennzeichnet, dass** das mindestens eine Kriterium ein Kriterium umfasst, das sich auf die Verteilung der Temperaturen bezieht, bei denen die Tabellen ($84_1$, $84_2$, $84_3$, $84_M$) erlangt wurden, wobei die Aktualisierung der gespeicherten Einheit von Rohwerten ($84_1$, $84_2$, $84_3$, $84_M$) auf eine regelmäßige Verteilung der Temperaturen innerhalb eines Bereichs von Temperaturen abzielt, in dem sich der Detektor im Verlauf seines Betriebs befindet.

**5.** Verfahren nach einem der vorhergehenden Ansprüche, **dadurch gekennzeichnet, dass** es darüber hinaus die Auswertung (122) einer ersten Bedingung zur Aktualisierung der Versatzkorrekturentabelle (81) umfasst, wobei die Erfüllung der ersten Bedingung auslöst:

- das Schließen des Verschlusses (50), die Erfassung (102) einer aktuellen Rohwertetabelle (83) und den Pflegeprozess (104) der aktuellen Einheit der gespeicherten Tabellen ($84_1$, $84_2$, $84_3$, $84_M$); und
- die Berechnung (108) einer neuen Versatzkorrekturentabelle (81) in Abhängigkeit von der aktuellen Rohwertetabelle (83) und der Einheit gespeicherter Rohwertetabellen ($84_1$, $84_2$, $84_3$, $84_M$).

**6.** Verfahren nach Anspruch 5, **dadurch gekennzeichnet, dass** die erste Bedingung zur Aktualisierung der Versatzkorrekturentabelle (81) ein Kriterium umfasst, das sich auf das zeitliche Bestehen der aktuellen Rohwertetabelle (83) bezieht, wobei die erste Bedingung insbesondere dann erfüllt wird, wenn das zeitliche Bestehen der aktuellen Tabelle über einer vorbestimmten Dauer liegt.

**7.** Verfahren nach einem der Ansprüche 5 und 6, **dadurch gekennzeichnet, dass** die erste Bedingung zur Aktualisierung der Versatzkorrekturentabelle (81) ein Kriterium umfasst, das sich auf die Abweichung zwischen der tatsächlichen Temperatur des Detektors und der Temperatur des Detektors, die mit der aktuellen Rohwertetabelle (83) assoziiert ist, bezieht, wobei die erste Bedingung insbesondere dann erfüllt wird, wenn die Abweichung über einem ersten vorbestimmten Schwellenwert liegt.

**8.** Verfahren nach einem der Ansprüche 5 bis 7, **dadurch gekennzeichnet, dass** es darüber hinaus die Auswertung einer zweiten Bedingung zur Aktualisierung der Versatzkorrekturentabelle (81) umfasst, wobei die Erfüllung der zweiten Bedingung zur Aktualisierung auslöst:

- das Schließen des Verschlusses (50) und die Erfassung (102) einer aktuellen Rohwertetabelle (83); und
- die Berechnung (108) einer neuen Versatzkorrekturentabelle (81) in Abhängigkeit von der aktuellen Rohwertetabelle (83) und der Einheit gespeicherter Rohwertetabellen ($84_1$, $84_2$, $84_3$, $84_M$).

**9.** Verfahren nach Anspruch 8, **dadurch gekennzeichnet, dass** die zweite Bedingung zur Aktualisierung der Versatzkorrekturentabelle (81) ein Kriterium umfasst, das sich auf die Abweichung zwischen der tatsächlichen Temperatur des Detektors und der Temperatur des Detektors, die mit der ersten Berechnung der Versatzkorrekturentabellen (81) assoziiert ist, bezieht, wobei die zweite Bedingung insbesondere dann erfüllt wird, wenn die Abweichung über einem zweiten vorbestimmten Schwellenwert liegt, der kleiner ist als der erste Schwellenwert.

**10.** Verfahren nach einem der Ansprüche 5 bis 9, **dadurch gekennzeichnet, dass** die Aktualisierung der Versatzkorrekturentabelle (81) die Berechnung (108) einer interpolierten Tabelle von Rohwerten durch Interpolation der aktuellen Rohwertetabelle (83) und einer vorbestimmten Anzahl von Tabellen aus der Einheit von gespeicherten Rohwertetabellen ($84_1$, $84_2$, $84_3$, $84_M$) umfasst, und dass die Berechnung der Versatzkorrekturentabelle (81) nach dem Verhältnis:

$$O_n = \overline{S_{\mathrm{int}\,erp}(Tamb)} - G_n \times S_{\mathrm{int}\,erp}(Tamb)_n$$

erfolgt, worin $O_n$ ein Wert der Versatzkorrekturentabelle ist, $\overline{S_{\mathrm{interp}}(Tamb)}$ der Mittelwert der interpolierten Rohwertetabelle ist, $G_n$ ein vorbestimmter Korrekturkoeffizient für die Verstärkung des Bolometers ist, der dem Wert $O_n$ entspricht, und $S_{\mathrm{interp}}(Tamb)_n$ der Rohwert ist, der dem Wert $O_n$ der interpolierten Tabelle entspricht.

**11.** Nicht temperaturgeregelter Wärmedetektor, Folgendes umfassend:

▪ eine Matrix aus Bolometern (10), die eine Netzhaut aus bolometrischen Membranen umfasst, die über einem Substrat (20) aufgehängt ist, in dem eine Leseschaltung (20) ausgebildet ist, die dazu ausgebildet ist, am Ausgang einen Signalrohwerteverlauf entsprechend jedem Bolometer der Matrix (10) im Zusammenhang mit einer beobachteten Szene auszugeben und in der Brennebene einer Optik (40) angeordnet ist;

▪ mindestens einen Temperatursensor (30), der dazu ausgebildet ist, die Temperatur an einer Stelle des Substrats zu messen;

▪ einen steuerbaren Verschluss (50), der dazu ausgebildet ist, eine gleichmäßige Szene für die Netzhaut zu bilden bilden; und

**dadurch gekennzeichnet, dass** er Einrichtungen (60, 70, 80) zur Verarbeitung von Informationen und zur Speicherung umfasst, die dazu ausgebildet ist, das Verfahren nach einem der vorhergehenden Ansprüche umzusetzen.

**Claims**

1. Method for correcting images produced by an array of bolometers (10) of a detector without temperature regulation, said array (10) comprising a retina of bolometric membranes arranged in the focal plane of an optics (40) and suspended above a substrate in which there is formed a readout circuit (20) capable of outputting a stream of raw signal values that correspond to each bolometer in the array (10) in relation to an observed scene, with the detector also comprising a shutter (50) arranged between the optics (40) and the retina? and the method involving, in an operating mode in which the ambient temperature conditions of the detector are free to change:

   ▪ a first step (102) of closing the shutter and acquiring and storing in a memory of the detector:

      ○ a current table (83) of raw values corresponding to an image of the shutter (50) by the array of bolometers (10); and
      ○ a temperature of the detector during acquisition of said current raw value table,

   ▪ a second step (108) of determining and storing, in the memory (80) of the detector, an offset correction table (81) for the current temperature of the detector as a function of:

      ○ the current raw value table (83) and the temperature associated thereof; and
      ○ a current set of raw value tables ($84_1$, $84_2$, $84_3$, $84_M$) corresponding to images of the shutter (50) by the array of bolometers (10) previously stored in the detector's memory (80) and temperatures of the detector associated respectively with each of these tables ($84_1$, $84_2$, $84_3$, $84_M$) at the time they were acquired, said temperatures being stored in the detector's memory (80); and

   ▪ a third step (60) of correcting the stream of raw values by means of the offset correction table (81),
   **characterised** in that it involves, subsequent to the acquisition of a current raw value table (83), a maintenance process for maintaining (104) of the current set of raw value tables ($84_1$, $84_2$, $84_3$, $84_M$) comprising :
   ▪ testing a condition for replacing a table of said current set ($84_1$, $84_2$, $84_3$, $84_M$) with the current raw value table (83); and
   ▪ if said condition is met, replacing the table of said current set of tables ($84_1$, $84_2$, $84_3$, $84_M$) with the current raw value table (83) and replacing the acquisition temperature of the replaced table with the acquisition temperature of the current raw values table (83),
   said test involving the determination, on the basis of at least one predetermined criterion, of whether there is a new set of tables obtained by replacing a table from the current set ($84_1$, $84_2$, $84_3$, $84_M$) with the current table (83) that is more relevant than the current set with regard to subsequent determination of the offset table (81).

2. Method as claimed in claim 1, **characterised** in that the current set of stored tables ($84_1$, $84_2$, $84_3$, $84_M$) is partially or totally built as a function of current tables (83) acquired while the detector is operating.

3. Method as claimed in claims 1 and 2, **characterised** in that the at least one criterion comprises a criterion relating to the relevance of these tables ($84_1$, $84_2$, $84_3$, $84_M$) vis-a-vis the detector's current operating state, especially a criterion relating to the age of their acquisition and/or a criterion relating to the detector's temperature stability at the time said raw value tables ($84_1$, $84_2$, $84_3$, $84_M$) were acquired.

4. Method as claimed in claim 1, **characterised** in that the at least one criterion comprises a criterion relating to the distribution of the temperatures at which the tables (83, $84_1$, $84_2$, $84_3$, $84_M$) were acquired with updating the set of raw value tables ($84_1$, $84_2$, $84_3$, $84_M$) being intended to ensure optimal distribution of these temperatures within the temperature range over which the detector operates.

5. Method as claimed in any of the above claims, *characterised* **in that** it also comprises evaluating (122) a first condition for updating the offset correction table (81) which, if said first condition is met, triggers:

   - closure of the shutter (50), acquisition (102) of a current raw value table (83) and maintenance the process (104) of the current set of stored tables ($84_1$, $84_2$, $84_3$, $84_M$); and
   - computation of (108) a new offset correction table (81) as a function of the current raw value table (83) and the set of stored raw value tables ($84_1$, $84_2$, $84_3$, $84_M$).

6. Method as claimed in claim 5, *characterised* **in that** the first condition for updating the offset correction table (81) comprises a criterion relating to the age of the current raw value table (83), said first condition being met, in particular, if the age of the current table exceeds a predetermined duration.

7. Method as claimed in either claim 5 or 6, *characterised* **in that** the first condition for updating the offset correction table (81) comprises a criterion relating to the difference between the detector's current temperature and the temperature of the detector associated with the current raw value table (83), said first condition being met, in particular, if said difference exceeds a first predetermined threshold.

8. Method as claimed in any of claims 5 to 7, *characterised* **in that** it also comprises evaluating a second condition for updating the offset correction table (81) and if said second updating condition is met this triggers

   • closure of the shutter (50), acquisition (102) of a current raw value table (83); and
   • computing (108) a new offset correction table (81) as a function of the current raw value table (83) and the set of stored raw value tables ($84_1$, $84_2$, $84_3$, $84_M$).

9. Method as claimed in claim 8, *characterised* **in that** the second condition for updating the offset correction table (81) comprises a criterion relating to the difference between the detector's current temperature and the temperature of the detector associated with the last time the offset correction table (81) was computed, said second condition being met, in particular, if said difference exceeds a second predetermined threshold that is lower than the first threshold.

10. Method as claimed in any of claims 5 to 9, *characterised* **in that** the offset correction table (81) involves computing (108) an interpolated raw value table by interpolating the current raw value table (83) and a predetermined number of tables of the set of stored raw value tables ($84_1$, $84_2$, $84_3$, $84_M$) and **in that** computing the offset correction table is performed in accordance with the equation:

$$O_n = \overline{S_{\mathrm{int}\,erp}(Tamb)} - G_n \times S_{\mathrm{int}\,erp}(Tamb)_n$$

where $O_n$ is a value in the offset correction table, $\overline{S_{\mathrm{interp}}(Tamb)}$ is the mean value of the interpolated raw value table, $G_n$ is a predetermined correction factor to correct the gain of the bolometer corresponding to said value $O_n$, and $\overline{S_{\mathrm{interp}}(Tamb)_n}$ is the raw value that corresponds to said value $O_n$ of the interpolated table.

11. Thermal detector without temperature regulation comprising:

   - an array of bolometers (10) comprising a retina of bolometric membranes suspended above a substrate (20) in which there is formed a readout circuit (20) capable of outputting a stream of raw signal values that correspond to each bolometer in the array (10) in relation to an observed scene and arranged in the focal plane of an optics (40);
   - at least one temperature sensor (30) capable of measuring the temperature at one point on the substrate;
   - a controllable shutter (50) capable of forming a uniform scene for the retina;
   *characterised* **in that** it comprises means (60, 70, 80) for treating data and memory able to implement a method according to anyone of the proceeding claims.

**Fig. 1**

Fig. 2

104

A          +  -200-  -          B

A1  -202-  A2                              B2  -218-

-206-  +

+  -210-  -

-214-  -

+  -216-  -

-220-  -

-222-

-226-

-204-      -208-      -212-  -213-                          -224-

-106-      -106-      -106-  -106-  -106-  -106-      -106-

# Fig. 3

Δ Tamb_min

signal de sortie

Δ Tamb_min

S(Tamb7)      Δ Tamb_min                        A2

A1

S(Tamb6)                              Δ Tamb_min

S(Tamb5)      Δ Tamb_min

B3

S(Tamb4)

B1

S(Tamb3)                B2

S(Tamb2)                                        Fig. 4

S(Tamb1)

A3

Δ Tamb_min

Δ Tamb_min

Tamb

Tamb1  Tamb2  Tamb3  Tamb4   Tamb6  Tamb7

Tamb5

Istab

$\dfrac{d\,Tamb}{dt}$

**Fig. 5**

10 min    3 min

ΔS
0
-ΔS

t acquis

Temps

**Fig. 6**

Sb
α
0
β

Temps

**Fig. 7**

S
100%
80%
0%

t acquis

Temps

Tamb (°C)

70
60
50
40
30
20
10
0
-10

0   2000  4000  6000  8000  10000 12000 14000 16000 18000

Temps (s)

**Fig. 8**

Fig. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1953509 A
- US 6433333 B
- US 5756999 A
- US 6028309 A
- US 6690013 B
- WO 2007106018 A
- US 20050029453 A
- WO 0184118 A